# EUROPEAN PATENT APPLICATION

(11) **EP 4 365 134 A1**
(43) Date of publication of application: **08.05.2024**
(21) Application number: 22833650.9
(22) Date of filing: 30.06.2022
(51) Int. Cl.: C01B 32/05, H01M 4/92, H01M 4/90

(54) **POROUS CARBON SUPPORT, METHOD FOR MANUFACTURING POROUS CARBON SUPPORT, AND FUEL CELL CATALYST USING SAME**

(30) Priority: 30.06.2021 KR 20210085990; 30.06.2021 KR 20210085991; 29.06.2022 KR 20220079934
(71) Applicant: The Carbon Studio Inc., Jeonju-si, Jeollabuk-do 54870 (KR)
(72) Inventor: KIM, Gi Min, Daejeon 34013 (KR); PARK, Jae Hyun, Daegu 42093 (KR)
(74) Representative: Cabinet Beaumont
(86) International application number: PCT/KR2022/009371
(87) International publication number: WO 2023/277596

(57) **Abstract**

The present disclosure provides a porous carbon support, a method of manufacturing the porous carbon support, and a fuel cell catalyst. Herein, the porous carbon support includes: a surface area of pores in a size range of more than 0 nm to less than 2 nm being in a range of 100 m²/g to 300 m²/g, as obtained through adsorption isotherm analysis based on the Harkins-Jura equation-based t-plot method; and a surface area of pores in a size range of 2 nm or more to 5 nm or less being in a range of 100 m²/g to 800 m²/g, as obtained through adsorption isotherm analysis based on the Harkins-Jura equation-based BJH desorption method, and the fuel cell catalyst includes metal particles including platinum supported on the porous carbon support.

## Description

### Technical Field

The present disclosure relates to a porous carbon support, a method of manufacturing a porous carbon support, and a fuel cell catalyst with the use of the same and, more particularly, to a porous carbon support that can effectively support metal particles including platinum (Pt) due to its high porosity as well as crystallinity, a method of manufacturing the porous carbon support, and a fuel cell catalyst having improved stability and durability by inclusion of the support.

Two national projects supported by government associated with this invention are described below.
Project Unique Number: 1711160139
Project Serial Number: 2021M3H4A1A02049886
Government Department: Ministry of Science and ICT
Specialized Institution for Project Management: National Research Foundation of Korea
Title of Research Business: Core technology development program/Nano and material technology development program/Future technology research center/First mover
Title of Project: Development of synthesis technology for highly crystalline and porous carbon support based on low-temperature processing
Contribution Rate: 1/2
Supervising Institute: The Carbon Studio Inc.
Research Period: January 1st, 2022 - December 31th, 2022
Project Unique Number: 1415178031
Project Serial Number: 20011473
Government Department: Ministry of Trade, Industry and Energy
Specialized Institution for Project Management: Korea Planning & Evaluation Institute of Industrial Technology
Title of Research Business: Material parts technology development program/Material parts heterogeneous technology convergence
Title of Project: Development of Core Technology for Production of Carbon Support for Electrode Catalyst of Fuel Cell to Realize Hydrogen Society
Contribution Rate: 1/2
Supervising Institute: The Carbon Studio Inc.
Research Period: January 1st, 2022 - December 31th, 2022

### Background Art

A polymer electrolyte membrane fuel cell (PEMFC) is a power generation system that generates electricity through a catalyst-mediated electrochemical reaction of hydrogen and oxygen. PEMFC has a structure in which a cation exchange membrane is located between an oxidizing electrode (hereinafter referred to as an anode) and a reducing electrode (hereinafter referred to as a cathode). Such PEMFC is expected to be in high demand in the future due to its applicability to transportation vehicles.

Catalysts are a key element determining the performance of fuel cells. Conventional catalysts for PEMFC have used an amorphous carbon support for supporting metal particles including platinum but had many problems.

For example, when a transportation fuel cell with a platinum-based catalyst is driven, at the start of operation the cathode suffers due to a high voltage applied thereto, and oxidation and irreversible deterioration occurs on the cathode, the anode suffers a dramatic voltage rise due to intermittent hydrogen deficiency in units of a fuel cell stack. This voltage rise deteriorates the carbon support of the catalyst. This situation, in turn, leads to detachment of platinum nanoparticles from the surface of the carbon support and reduces the active surface area of the platinum particles, thereby reducing the stability and durability of the fuel cells as a whole.

To address the issue, studies have been conducted lately to boost a catalytic activity by improving the dispersion of platinum particles through additional pore formation in carbon supports. However, when chemical reactions are forcibly induced to form pores in carbon like the conventional steam activation method, the reactions proceed randomly on the carbon surface, making it difficult to control the size distribution of the pores formed. In addition, the activation reaction and the pore formation proceed without distinguishing between the crystalline and amorphous regions of the carbon in the process so that the overall crystallinity decreases after the pore formation. This processing consequently exhibits a trade-off relationship between porosity and crystallinity. In other words, even when porosity and dispersion of platinum particles are promoted through the activation process, since crystallinity decreases, disadvantages of reduction in stability and durability in fuel cell operation are present.

### Disclosure

### Technical Problem

One objective of the present disclosure is to provide a porous carbon support and a manufacturing method thereof, the porous carbon support having a high crystallinity as well as micropores capable of effectively supporting metal particles including platinum.

The other objective of the present disclosure is to provide a fuel cell catalyst with improved stability and durability by using the porous carbon support.

However, the technical task of the present disclosure is not limited to this, and the following description includes others which may be clearly understood by the ordinarily skilled in the art.

### Technical Solution

The present disclosure provides a porous carbon support having pores having specific surface areas defined as follows: the surface area of pores in a size range of more than 0 nm to less than 2 nm in the porous carbon support is 100 m²/g to 300 m²/g, as obtained through adsorption isotherm analysis based on the Harkins-Jura equation-based t-plot method in a thickness (t) range of 0.35 nm to 0.4 nm, and the surface area of pores in a size range of 2 nm or more to 5 nm or less is 100 m²/g to 800 m²/g, as obtained through adsorption isotherm analysis based on the Harkins-Jura equation-based Barrett-Joyner-Halenda (BJH) desorption method.

The ratio of the surface area of the pores in a size range of 2 nm or more to 5 nm or less to the total BET-based specific surface area of the porous carbon support may be in a range of 0.2 to 1, as obtained through adsorption isotherm analysis based on the Harkins-Jura equation-based BJH desorption method.

The surface area of pores in a size range of 2 nm or more to 100 nm or less, which are obtained based on the BJH desorption method based on the Harkins-Jura equation from the porous carbon support, may be in a range of 200 m²/g to 2000 m²/g.

The ratio of the surface area of the pores in a size range of 2 nm or more to 100 nm or less to the total BET-based specific surface area of the porous carbon support may be in a range of 0.5 to 2, as obtained through adsorption isotherm analysis based on the Harkins-Jura equation-based BJH desorption method.

The tap density of the porous carbon support may be in a range of 0.05 g/cm³ to 0.5 g/cm³.

The true density of the porous carbon support may be in a range of 2.1 g/cm³ to 4 g/cm³.

The average size of primary particles of the porous carbon support may be in a range of 10 nm to 30 nm.

The porous carbon support may have a layered structure.

An average interlayer spacing (d₀₀₂) measured by X-ray diffraction of the porous carbon support is in a range of 0.335 nm to 0.355 nm, and an a-axis lattice constant (La) may be in a range of 4 nm to 10 nm.

The average number of graphene layers of the porous carbon support may be in a range of 6 to 20.

The mass reduction rate of the porous carbon support measured through thermogravimetric analysis (TGA) in a temperature range of 500°c to 700°c may be in a range of 0% to 30%.

The minimum temperature of the porous carbon support through derivative thermogravimetry (DTG) analysis may be in a range of 740°c to 850°c.

In addition, the present disclosure provides a method of manufacturing a porous carbon support, the method including:
(a) heat-treating a carbon material in a temperature range of 1500°c to 3000°c to remove impurities and crystallize the carbon material;
(b) pre-treating the resulting crystallized carbon material under an atmosphere containing at least one heteroatom selected from the group consisting of boron, carbon, nitrogen, oxygen, phosphorus, and sulfur to introduce heteroatom-doped activation sites in the crystallized carbon material;
(c) mixing the carbon material having the activation sites with an additive including an organic surfactant and then heat treating the mixture to remove the heteroatoms and to activate the carbon material;
(d) washing and drying the activated carbon material.

In addition, the present disclosure provides a fuel cell catalyst with metal particles including platinum supported on the porous carbon support.

### Advantageous Effects

The porous carbon support of the present disclosure has a highly porous structure suitable to support metal particles including platinum and exhibits a high crystallinity, so that in the case where the carbon support is used as a fuel cell catalyst, the porous carbon support exhibits excellent stability and durability as well as high efficiency and cost efficiency.

According to the method of manufacturing the present disclosure, crystallinity and porosity can be simultaneously promoted through the processes of introducing heteroatoms into carbon materials and then removing the heteroatoms. Thus, the porous carbon support with high crystallinity and porosity can be obtained at a high yield.

The fuel cell catalyst of the present disclosure has metal particles, including platinum, in a suitable size to be effectively dispersed inside the pores of the porous carbon support, which enhances a catalyst activity. Therefore, characteristics of the fuel cell using the same catalyst of the present disclosure can be improved.

However, the effects of the present disclosure are not limited to this, and expected effects from the technical characteristics of the present disclosure can be included even when the expected effects are not directly described hereinafter.

### Description of Drawings

FIGS. 1A to 1E are SEM (Scanning Electron Microscope) photos of the porous carbon support according to embodiments 1-1 to 1-2 or comparative examples 1-1 to 1-3, respectively;
FIGS. 2A to 2E are TEM (Transmission Electron Microscope) photos of the porous carbon support according to embodiments 1-1 to 1-2 or comparative examples 1-1 to 1-3, respectively;
FIGS. 3A to 3E are graphs of XRD of the porous carbon support according to embodiments 1-1 to 1-2 or comparative examples 1-1 to 1-3, respectively;
FIG. 4A is a TGA graph of the porous carbon support according to embodiments 1-1 to 1-2 and comparative examples 1-1 to 1-3, and FIG. 4B is a DTG graph of the porous carbon support according to embodiments 1-1 to 1-2 and comparative examples 1-1 to 1-3; and
FIGS. 5A to 5E are TEM photos of a catalyst for a fuel cell according to embodiments 2-1 to 2-2 and comparative examples 2-1 to 2-3, respectively.

### Mode for Disclosure

The present disclosure provides a porous carbon support, wherein in the porous carbon support, the surface area of pores in a size range of more than 0 nm to less than 2 nm is in a range of 100 m²/g to 300 m²/g, as obtained through adsorption isotherm analysis based on the Harkins-Jura equation-based t-plot method in a thickness (t) range of 0.35 nm to 0.4 nm, and the surface area of pores in a size range of 2 nm or more to 5 nm or less is in a range of 100 m²/g to 800 m²/g, as obtained through adsorption isotherm analysis based on the Harkins-Jura equation-based Barrett-Joyner-Halenda (BJH) desorption method.

The porous carbon support of the present disclosure has highly porous structure suitable to support platinum particles, and exhibits high crystallinity so that in the case where the carbon support is used as a catalyst for a fuel cell, stability and durability are promoted, and at the same time a high efficiency and a low-cost effect may be achieved.

The term "isotherm adsorption based on the t-plot method based on the Harkins-Jura equation" in the present disclosure refers to a method of calculating surface area of pores in a porous carbon support, which is widely known in the art. Specifically, the relative pressure (P/Po) on the x-axis of constant temperature line of nitrogen adsorption is converted into the thickness of gas adsorption layer based on the Harkins-Jura equation to obtain a t-plot formula, and the t-plot formula obtained is used to calculate the surface area of the pores by determining the y intercept of the trend line against the specific range of thickness on the x-axis (Harkins-Jura equation: t = [13.99 / {0.034 - log (P/Po)}]^{0.5}, P/Po: relative pressure, t: thickness of gas adsorption).

The "isotherm adsorption based on the t-plot method based on the Harkins-Jura equation" may calculate the surface area of pores in a negative value depending on the thickness (t) of gas adsorption so that it is important to select the proper range of the thickness depending on the adsorption characteristics of materials. Whether or not the range of the thickness is proper may be checked based on whether the surface area of the pores has a positive value, and based on correlation coefficient (Removal of Pharmaceuticals and Personal Care Products from Aqueous Solutions with Metal-Organic Frameworks, Isil Akpinar, UCL, 2017, pp. 55 and 83).

Herein, the correlation coefficient shows how well the corresponding index reflects the original data, and may be obtained by applying the calculation method of Pearson Correlation Coefficient (PCC) in the trend line. When the calculated surface area of the pores has a positive value, the result is determined as reliable. When the correlation coefficient calculated in the process is closer to the value of 1, the trend line of t-plot formula is determined to reflect the original data well (The dual capture of AsV and AsIII by UiO-66 and analogues, Cornelius O. Audu etc., The Royal Society of Chemistry 2016, p. 1), (Hierarchically Porous Organic Polymers: Highly Enhanced Gas Uptake and Transport through Templated Synthesis, Sanjiban Chakraborty, ESI for Chem, 2014, p. 2).

The t-plot method may be easily used when the surface area of micropores in a size range of more than 0 nm to less than 2nm is calculated. The porous carbon support of the present disclosure may have micropores in a size range of more than 0 nm to less than 2nm. The pores in the size range make a connection among meso- or macro-pores in a size range of more than 2 nm, acting as a bridge of the entire pore network in the interior of porous carbon. The surface area of micropores in a size range of more than 0 nm to less than 2 nm, as calculated based on the t-plot method based on the Harkins-Jura equation was found to have a positive value, as obtained in the gas adsorption thickness (t) range of 0.35 nm to 0.4 nm.

In addition, when micropores in a size range of more than 0 nm to less than 2 nm of the porous carbon support were studied in a thickness (t) range of 0.35 nm to 0.4 nm based on the t-plot method, the value of the correlation coefficient was 0.9990 or more, closer to the value of 1, which may be viewed as almost the identical to the real value.

The term " isotherm adsorption based on BJH desorption method based on the Harkins-Jura equation" in the present disclosure is another calculation method of the surface area of pores in a porous carbon support, wherein the constant temperature line of nitrogen desorption is converted into a BJH desorption curve based on the Harkins-Jura equation, which is widely known in the art so that details of the method are not described herein. The BJH desorption method may be used to calculate the surface area of pores in a size range of 2 nm or more. Pores in a size range of 2 nm to 5 nm among pores in a size range of 2 nm or more are the portions for platinum particles to be supported, in an example of catalyst synthesis, wherein the characteristics of platinum particles supported are determined by high porosity of the pores in the size range.

The surface area of the pores in a size range of more than 0 nm to less than 2 nm of the porous carbon support of the present disclosure may be in the range of 100m²/g to 300m²/g, as obtained in the thickness (t) range of 0.35 nm to 0.4 nm based on t-plot method based on the Harkins-Jura equation. In the case of pores smaller than the mentioned-sized pores, insufficient micropores connecting meso- or macro-pores are present, thereby gas is not easily transmitted in fuel cell operation. However, the micropores in the size only act as a bridge among meso- or macro-pores, and are not the portion supporting platinum particles so that when pores are larger than micropores, the specific surface area of pores capable of supporting platinum particles may be insufficient. That is, a suitable specific surface area with the mentioned range is required to be retained.

To be specific, the range may be 100 m²/g to 250 m²/g or 100 m²/g to 200 m²/g or 120 m²/g to 190 m²/g or 135 m²/g to 155 m²/g or 165 m²/g to 185 m²/g.

The surface area of the pores in a size range of 2 nm or more to 5 nm or less of the porous carbon support of the present disclosure may be in a range of 100 m²/g to 800 m²/g, as obtained based on the BJH desorption method based on the Harkins-Jura equation. In the case of the smaller surface area than that in the mentioned range, the specific surface area being able to be used for supporting is insufficient so that metal particles including platinum are not supported on the surface or are supported in a collective way, which lowers catalyst performance or makes the form difficult to maintain, and eventually leads to problems in stability and durability. Thus, it is undesirable. In addition, in the case of the surface area outside the mentioned range, the specific surface area of pores capable of supporting metal particles is too expansive so that platinum particles in a size range of less than 3 nm may be supported. That is, a suitable specific surface area in the mentioned range is required to be retained.

Specifically, the area may be in a range of 100 m²/g to 600 m²/g or 200 m²/g to 500 m²/g or 200 m²/g to 250 m²/g, or 200 m²/g to 230 m²/g or 400 m²/g to 480 m²/g, or 440 m²/g to 480 m²/g.

According to one embodiment of the present disclosure, the ratio of the surface area of the pores in a size range of 2 nm or more to 5 nm or less to the total BET-based specific surface area of the porous carbon support may be in a range of 0.2 to 1, as obtained through adsorption isotherm analysis based on the Harkins-Jura equation-based BJH desorption method. Thus, the disclosure allows a total BET-based specific surface area to be occupied at a large level and allows platinum particles in a size range of 3 nm to 4 nm suitable for a fuel cell to be effectively supported.

To be specific, the ratio may be in a range of 0.2 to 0.8 or 0.3 to 0.7 or 0.35 to 0.65 or 0.35 to 0.4, or 0.6 to 0.65.

The porous carbon support of the present disclosure has a pore network structure where meso- or macro-pores are coupled by micropores. In addition to pores in a size range of 2 nm to 5 nm used for platinum particles to be effectively supported, pores in a size range of 2 nm to 100nm are also used as a pathway for water discharge in fuel cell operation, and the pores in the range technically contribute to the performance of a fuel cell.

According to one embodiment of the present disclosure, the surface area of the pores in a size range of 2 nm or more to 100 nm or less may be in a range of 200 m²/g to 2000 m²/g, as obtained through adsorption isotherm analysis based on the Harkins-Jura equation-based BJH desorption method. In the case of outside the range, water, a product generated in fuel cell operation using the carbon support with the pores outside the range, fails to be smoothly discharged and thus the characteristics of the fuel cell may not be utilized well, which is undesirable.

Specifically, the range may be 500 m²/g to 1500 m²/g or 600 m²/g to 1000 m²/g or 600 m²/g to 650 m²/g, or 900 m²/g to 1000 m²/g.

According to one embodiment of the present disclosure, the ratio of the surface area of the pores in the size of 2 nm or more to 100 nm or less may be in a range of 0.5 to 2, as obtained through adsorption isotherm analysis based on the Harkins-Jura equation-based BJH desorption method. In the case of outside the range, water, a product generated in fuel cell operation using the carbon support with the pores outside the range, fails to be smoothly discharged and thus the characteristics of the fuel cell may not be utilized well, which is undesirable.

Specifically, the ratio may be in a range of 0.8 to 1.8 or 1.0 to 1.5 or 1.1 to 1.2, or 1.0 to 1.2.

In the present disclosure, the term "tap density" refers to the density of the total volume of a porous carbon support. The term "true density" refers to the density of the volume occupied only by materials in a porous carbon support, which means the density of the rest of the volume other than the volume for air gap out of the total volume, which may be measured based on ASTM D8176.

According to one embodiment of the present disclosure, tap density may be in a range of 0.05 g/cm³ to 0.5 g/cm³, and true density may be in a range of 2.1 g/cm³ to 4 g/cm³. In the case of outside the range of the tap density or true density, a huge difference in porosity occurs. The difference in porosity may leads to a difference in oil absorption in slurry preparation for fuel cell manufacturing. In that case, manufacturing conditions are required to change, which may leads to a low efficiency in manufacturing, which is undesirable.

Specifically, the tap density may be in a range of 0.08 g/cm³ to 0.4 g/cm³ or 0.08 g/cm³ to 0.3 g/cm³ or 0.08 g/cm³ to 0.2 g/cm³, or 0.08 g/cm³ to 0.15 g/cm³. Specifically, the true density may be in a range of 2.2 g/cm³ to 3.5 g/cm³ or 2.6 g/cm³ to 3.1 g/cm³, or 2.3 g/cm³ to 2.6 g/cm³.

The average size of primary particles of the porous carbon support may be in a range of 10 nm to 30 nm. In the case of outside the range, slurry for fuel cell manufacturing is difficult to be evenly dispersed in formation such as an occurrence of collective formation so that catalyst performance is lowered, or the catalyst form is hard to maintain, and thus electrochemical stability may be reduced, which is undesirable. Specifically, the size range may be 15 nm to 30 nm or 20 nm to 30 nm. The average size of primary particles may be measured based on ASTM D3849.

Graphite is a crystalline form in a hexagonal close packed structure where the planes of regular hexagons are stacked in parallel, and when the smaller the average interlayer spacing (d₀₀₂) is, the higher the a-axis lattice constant (La) is, and the higher the average number of graphene layers in the structure is, the higher crystallinity of graphite is. The average interlayer spacing (d₀₀₂), the a-axis lattice constant (La), and the average number of graphene layers may be measured based on ASTM D5187 using X-ray diffraction.

According to one embodiment of the present disclosure, an average interlayer spacing (d₀₀₂) may be in a range of 0.335 nm to 0.355 nm, and an a-axis lattice constant (La) may be in a range of 4 nm to 10 nm, and the average number of graphene layers may be in a range of 6 to 20, which are measured by X-ray diffraction. This kind of porous carbon support tend to have a very narrow interlayer spacing, a lot of stacked graphite and a higher thickness of graphite, and a larger width of graphite than normal on average so that crystallinity is significantly high, which means that the carbon support is oxidation-resistant in fuel cell operation and minimizes deterioration. In the case of outside the range, intended effects of the present disclosure may not be obtained, which is undesirable.

In a porous carbon support of the present disclosure, more specifically, an average interlayer spacing (d₀₀₂) may be in a range of 0.340 nm to 0.352 nm or 0.342 nm to 0.350 nm or 0.342 nm to 0.347 nm, or 0.348 nm to 0.350 nm, which is measured by using X-ray diffraction. Specifically, an a-axis lattice constant (La) may be in a range of 6 nm to 9 nm or 7 nm to 9 nm or 7 nm to 8 nm, or 8 nm to 9 nm. Specifically, the average number of graphene layers may be in a range of 7 to 15 or 7.5 to 12 or 8 to 9, or 10 to 11.

The term "Thermogravimetric analysis (TGA)" in the present disclosure refers to measure a mass change rate of a sample subjected to temperature as a function of temperature or time. Oxidation-resistance of carbon may be determined through TGA under an oxidated gas atmosphere. A slower mass reduction in a higher temperature range means a better oxidation-resistance. Derivative Thermogravimetry (DTG) may be conducted through TGA, and results may be measured based on ASTM E1131.

According to one embodiment of the present disclosure, mass reduction rate of the porous carbon support in a temperature range of 500°C to 700°C through TGA is in a range of 0% to 30%, which means an excellent oxidation-resistance of the carbon support so that when the carbon support is used for a fuel cell catalyst, carbon deterioration may be minimized, and eventually stability and durability may be achieved. More specifically, a mass reduction rate in a temperature range of 500°c to 700°c may be in a range of 2% to 28% or 10% to 28% or 15% to 25% or 18% to 20%, or 21% to 23%.

According to one embodiment of the present disclosure, the temperature at which a 30% mass reduction of carbon materials from the total is found though TGA is in a high temperature range of 700°c to 740°c. The experimented carbon support exhibits an excellent oxidation-resistance and thus may minimize carbon deterioration when used as a fuel cell catalyst, and eventually stability and durability may be achieved. More specifically, the temperature at which a 30% mass reduction of carbon materials from the total is found may be in a range of 705°c to 730°c or 710°c to 715°c, or 715°c to 725°c.

According to one embodiment of the present disclosure, the minimum temperature of the porous carbon support obtained through DTG is in a range of 740°c to 850°c, which means an excellent oxidation-resistance of the carbon support so that when the carbon support is used as a catalyst for a fuel cell, heat generation of carbon may be minimized, and eventually stability and durability may be achieved. Specifically, the temperature may be in a range of 750°c to 820°c or 750°c to 780°c, or 750°c to 760°c, or 770°c to 780°c.

Meanwhile the present disclosure provides a catalyst for a fuel cell in which a porous carbon support is used as a catalyst support for a fuel cell and metal particles including platinum particles are supported on the porous carbon support.

The catalyst for a fuel cell of the present disclosure is formed by an effective dispersion of suitable-sized metal particles including platinum into the pores of the porous carbon support, which improves a catalyst activity, thereby characteristics of a fuel cell using the catalyst may be improved.

According to one embodiment of the present disclosure, the metal particles may be any one selected from the group consisting of Pt, Ru, Sn, Pd, Ti, V, Cr, Mn, Fe, Co, Ni, Cu, Zn, Al, Mo, Se, W, Ir, Os, Rh, Nb, Ta, Zr, and Pb or a mixture of two or more metals of the group.

Specifically, a catalyst for a fuel cell of the present disclosure may be an electrocatalyst for the fuel cell. The electrode may be an anode or a cathode, and preferably may be a cathode.

According to one embodiment of the present disclosure, the fuel cell may be a polymer electrolyte fuel cell, but is not limited thereto.

Meanwhile the present disclosure provides a method, the method including:
(a) heat-treating a carbon material at a temperature range of 1500°c to 3000°c to remove impurities and crystallize the material;
(b) pre-treating the resulting crystallized carbon material under an atmosphere containing at least one heteroatom selected from the group consisting of boron, carbon, nitrogen, oxygen, phosphorus, and sulfur to introduce heteroatom-doped activation sites in the crystallized carbon material;
(c) mixing the carbon materials having the activation sites with an additive including an organic surfactant and then heat treating the mixture to remove the heteroatoms and to activate the carbon material;
(d) washing and drying the activated carbon material.

In the method of manufacturing the present disclosure, heteroatom substitution in the molecular structure of carbon makes the substituted sites relatively unstable, and afterwards when a chemical reaction such as activation process proceeds, a relatively high occurrence of activation reaction may be induced at the unstable sites, and thus not only crystallinity but also a higher yield may be achieved. These heteroatom-introduced sites also serve as a site for micropore formation. Consequently, a porous carbon support may be manufactured in which the carbon support has a structure of a high porosity suitable for supporting platinum particles and also exhibits a high crystallinity, and thus when the carbon support is used as a catalyst for a fuel cell, stability and durability of the catalyst are promoted, and at the same time a high efficiency and a low-cost effect may be achieved.

Step (a) is a step of heat-treating carbon materials, removing impurities from the materials, and crystallizing the materials. Through the step, heteroatoms may be effectively infiltrated in the interior structure of the carbon materials (step (b)). Herein, the impurities are a material other than carbon present on the surface of or inside the carbon materials, and the examples of the impurities may be petroleum residue or other functional groups, but are not limited thereto. In the step (a), as the lattice constant of carbon materials increases, a partial or entire crystallization may be carried out.

In one embodiment of the present disclosure, carbon materials may be amorphous carbon such as a hard carbon (cellulose, phenolic resins, and isotropic pitch) and a soft carbon (mesophase pitch and needle cokes); and crystalline carbon such as artificial graphite and natural graphite and specifically be amorphous carbon, and more specifically soft carbon. A soft carbon exhibits relatively more anisotropic property than hard carbon, and planar layers of carbon are arranged in parallel so that crystallization which means graphitization may easily proceeds through heat treatment of 1500°C or more. The result may be CNT (carbon nano tube) or CNF (carbon nano fiber) in some cases.

In one embodiment of the present disclosure, the step (a) may be carried out under a vacuum or nitrogen atmosphere or at an atmosphere of noble gases such as argon, neon, and helium at a temperature range of 1500°c to 3000°c for 10 minutes or more. These conditions are designed for crystallizing carbon materials along with removal of impurities other than carbon present in carbon materials, when outside the range of the conditions, the objective of the present disclosure may not be achieved, which is undesirable. Specifically, the step may proceed under a vacuum or nitrogen atmosphere or under a noble gas atmosphere at a temperature range of 1500°c to 2000°c for 10 minutes to 100 minutes, and more specifically the step may proceed under a vacuum or nitrogen atmosphere or under a noble gas atmosphere at a temperature range of 1500°c to 2000°c or 2100°c to 2500°c for 10 minutes to 50 minutes.

In one embodiment of the present disclosure, the impurities are elements other than carbon present in carbon materials, and the examples of the impurities may be boron, carbon, nitrogen, oxygen, phosphorus, and sulfur, but are not limited thereto.

The step (b) is a step of introducing predetermined heteroatoms into crystallized carbon materials after the removal of the impurities, and carbons are selectively substituted by heteroatoms depending on the degree of crystallization in the carbon materials, ranging from low to high crystallization degrees in the process. The heteroatom introduction sites serve as a starting point of a reaction in the subsequent activation process and also serve as a place where micropores are formed. In some cases, by adjusting the introduction sites or the frequency of heteroatoms, micropores in a wanted size may be obtained in a wanted portion, thereby the dispersion of pores in a wanted form may be induced.

In one embodiment of the present disclosure, the pre-treatment means heat treatment carried out at a temperature range of 400°c to 1200°c for 30 minutes to 600 minutes under an atmosphere containing at least one heteroatom selected from the group consisting of boron, carbon, nitrogen, oxygen, phosphorus, and sulfur which are supplied at a flow speed range of 100 sccm to 800 sccm or 10 Nm³/hr to 100 Nm³/hr. In the case of outside the range of the conditions, pores in a wanted form may not be formed in a sufficient way in a wanted location of the carbon materials, and thus intended effects of the present disclosure may not be obtained, which is undesirable. Specifically, heat treatment may be carried out at a temperature range of 500°c to 1000°c at a flow speed range of 100 sccm to 600 sccm for 60 minutes to 600 minutes.

In one embodiment of the present disclosure, the heteroatoms may be at least one selected from the group consisting of boron, carbon, nitrogen, oxygen, phosphorus, and sulfur.

The step (c) is a step of forming micropores after the introduction of heteroatoms in the pre-treatment serves as a starting point of a reaction, and the heteroatoms react with additives at a high temperature, and the reaction thereof may form a micropore structure suitable for a fuel cell. Through the activation process, the removal of heteroatoms which doped the portions of carbon materials in a low degree of crystallinity proceeds. The process may promote crystallinity and lead to the formation of pores in a wanted size, and ultimately carbon support with a highly porous and crystalline structure may be formed.

In one embodiment of the present disclosure, the additives may contain 0.1 part by weight to 10 parts by weight of an inorganic or organic surfactant, 0.1 part by weight to 10 parts by weight of alkali metal hydroxide, and 1 part by weight to 10 parts by weight of neutralized water based on 100 parts by weight of the carbon materials with activation sites introduced through pre-treatment. In the case of outside the ranges, intended effects may not be obtained, which is undesirable. Specifically, the additives may contain 0.5 part by weight to 5 parts by weight of an organic surfactant, 0.5 part by weight to 5 parts by weight of alkali metal hydroxide, and 1 part by weight to 8 parts by weight of neutralized water based on 100 parts by weight of the carbon materials with activation sites introduced through pre-treatment.

In one embodiment of the present disclosure, the alkali metal hydroxide may be any one or more selected from the group consisting of LiOH, NaOH, KOH, RbOH, and CsO, but is not limited thereto.

In one embodiment of the present disclosure, the organic surfactant may be at least any one selected from the group consisting of SDBS, SDS, LDS, CTAB, DTAB, PVP, Triton X-series, Brij-series, Tween-series, poly (acrylic acid), and polyvinyl alcohol, but is not limited thereto.

In one embodiment of the present disclosure, the heat treatment may proceed under a noble gas atmosphere at a temperature range of 500°c to 1000°c for 10 minutes to 100 minutes. In the case of outside the range of the conditions, pores in a wanted size may not be formed in a wanted location in a sufficient way so that intended effects of the present disclosure may not be obtained, which is undesirable. Specifically, the step may be carried out at a temperature range of 600°C to 900°C for 10 minutes to 60 minutes or at a temperature range of 600°c to 800°c for 20 minutes to 40 minutes.

In step (d), activated carbon materials are washed and dried.

In one embodiment of the present disclosure, the washing may proceed under a pH condition range of pH 5 to pH 9 and specifically under a pH condition range of pH 6 to pH 8. In the case of outside the ranges, basic or acidic materials in carbon materials may be present, which subsequently has a significant impact on supporting a catalyst and operating MEA, which is undesirable.

In one embodiment of the present disclosure, the drying may proceed at a temperature range of 70°c to 120°c and at an atmospheric pressure, and for 10 hours to 20 hours, and then at a temperature range of 80°c to 150°c and under a vacuum condition, and for 1 hours to 5 hours. In the case of outside the range of the conditions, moisture may be present in carbon materials, and the residual moisture may result in the inaccuracy in the carbon content when a catalyst is synthesized. The step may be carried out at a temperature range of 70°c to 100°c and at an atmospheric pressure, and for 10 hours to 15 hours, and then at a temperature range of 80°C to 120°C and under a vacuum condition, and for 1 hours to 3 hours.

Hereinafter, examples of the present disclosure are described in detail. However, the following examples are illustrative of the present disclosure, and the description of the present disclosure is not limited to the following examples.

### Example 1-1: Manufacturing of porous carbon support

(a) Carbon materials (KETJENBLACK 600JD) were heated under an argon atmosphere at a temperature range of 2100°c to 2500°c (b) for 10 minutes to 50 minutes and crystallized. Afterwards, the crystallized carbon materials were pretreated under an atmosphere of oxygen and nitrogen supplied at a flow speed range of 100 sccm to 600 sccm with heat treatment at a temperature range of 500°c to 1000°c for 1 hour to 10 hours. After the pre-treatment, an organic surfactant and neutralized water in the part by weight each mentioned above was added in order. In the process, 0.5 part by weight to 3 parts by weight of an organic surfactant, 0.5 part by weight to 3 parts by weight of potassium hydroxide, and 1 part by weight to 10 parts by weight of neutralized water were added based on 100 parts by weight of the pre-treated carbon materials, and then the sample was stirred for 30 minutes or more and hot-air dried. The sample was heated under a noble gas atmosphere, at a temperature of 600°c or more, and for 30 minutes or more and then was recovered. After adding hydrochloric acid, ammonia water, and neutralized water to the sample, the recovered sample was stirred for 30 minutes or more, respectively, and then the sample was washed through vacuum filtration. The addition of hydrochloric acid and ammonia water was carried out one time, respectively, and a part by weight of hydrochloric acid to potassium hydroxide was in a range of 1 to 5, and a part by weight of ammonia water to hydrochloric acid was in a range of 1 to 5. Addition of neutralized water was repeated until pH of the solution reached to the pH range of pH 6 to pH 8 in stirring. When pH goes to the wanted pH, the sample was dried at a temperature of 80°C or more, at an atmospheric pressure, and for 12 hours or more and additionally dried at a temperature of 100°c or more, under a vacuum condition, and for 1 hour or more, and recovered.

### Example 1-2 and Comparative Examples 1-1 to 1-3: Manufacturing of porous carbon support

A porous carbon support of Example 1-2 was manufactured in the same method, as shown in Example 1-1 other than the condition change between Example 1-1 and Example 1-2, as shown in Table 1. In Comparative Examples 1-1 to 1-3, the carbon materials proposed in Table 1, respectively, were used as a porous carbon support.

**[Table 1]**

| | (a) | (b) |
|---|---|---|
| Example 1-1 | KETJENBLACK 600JD(Furnace Black) (Lion Corporation) | Under an Argon Atmosphere, at Temperatures Ranging from 2100°C to 2500°C, for 10 to 50 Minutes |
| Example 1-2 | KETJENBLACK 600JD(Furnace Black) (Lion Corporation) | Under an Argon Atmosphere, at Temperatures Ranging from 1500°C to 2000°C, for 10 to 50 Minutes |
| Comparative Example 1-1 | Vulcan XC 72 (Acetylene Black) (CABOT Corporation) | X |
| Comparative Example 1-2 | KETJENBLACK 600JD(Furnace Black) (Lion Corporation) | X |
| Comparative Example 1-3 | Li-435 (Acetylene Black) (DENKA Company Limited) | X |

### Example 2-1: Manufacturing of catalyst for fuel cell

0.75 g of a porous carbon support manufactured according to Example 1-1 was dispersed in the mixed solution of Ethylene glycol(EG) and water. In the process, a part by weight of water to Ethylene glycol (EG) was 1. Platinum precursors and a stabilizer were added in the dispersed solution in order. In the process, the platinum precursors had a concentration range of 10% by weight to 50% by weight and a weight range of 2 g to 10 g, and the stabilizer had a concentration range of 10% by weight to 50 % by weight and a weight range of 2 g to 10 g. Afterwards, the mixed solution was heated to a temperature range of 90°c to 160°c for 1 hour to 5 hours to have platinum particles to be supported on the surface of the porous carbon support. After that, the mixed solution was cooled to a room temperature, and the porous carbon support with supported platinum particles on was filtered, sufficiently washed in purified water, and dried at a temperature of 250°c in a vacuum drying machine, and then a catalyst for a fuel cell was manufactured.

### Example 2-2 and Comparative Examples 2-1 to 2-3: Manufacturing of catalyst for fuel cell

Catalysts for a fuel cell of Example 2-2 and Comparative Examples 2-1 to 2-3 were manufactured in the same method, as shown in Example 2-1 other than the use of porous carbon supports according to Examples 1-1 to 1-2 and Comparative Examples 1-1 to 1-3.

### Experimental Example 1

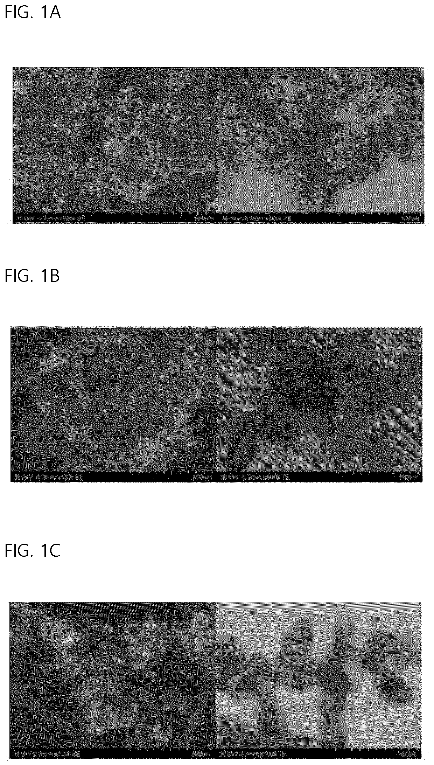

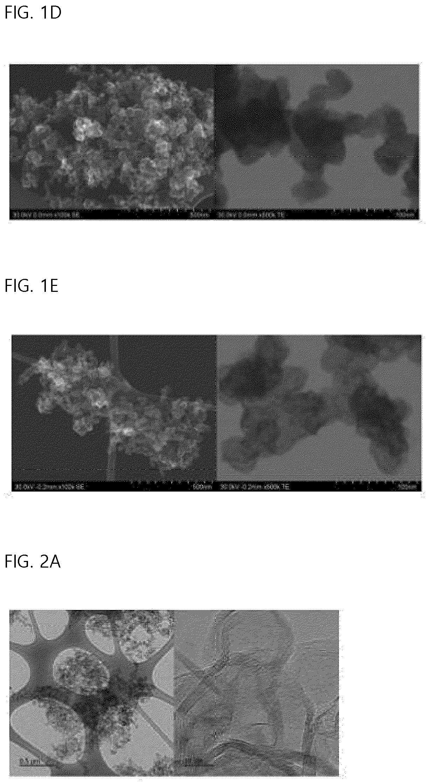

The photos of the porous carbon supports by using SEM (Scanning Electron Microscope) according to Examples 1-1 to 1-2 and Comparative Examples 1-1 to 1-3 were displayed in FIGS. 1A to 1E, and the photos of porous carbon supports by using TEM (Transmission Electron Microscope) were displayed in in FIGS. 2A to 2E.

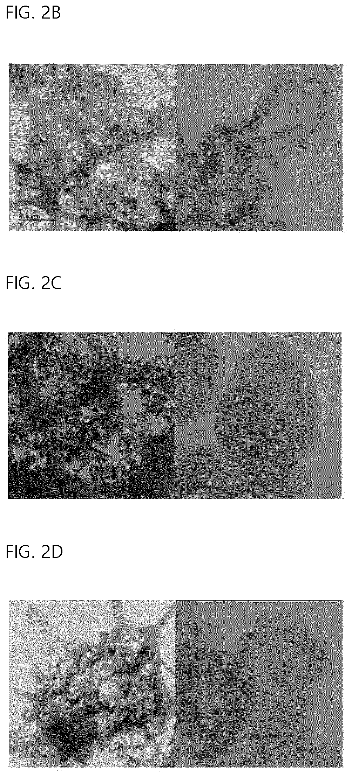

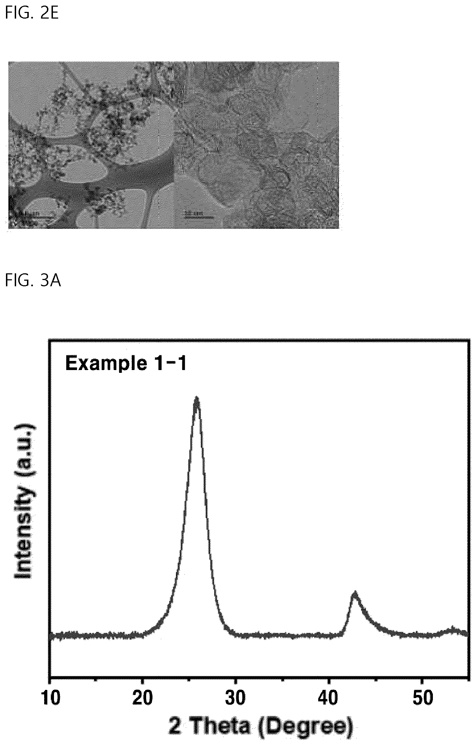

Taken together, Comparative Example 1-1 (as shown in Fig. 1C and Fig. 2C shows carbons with a fully-filled structure inside, which is far from the highly porous structure, and crystallized layers are also not clearly observed. Hollow pores were observed in Comparative Example 1-2 (as shown in Fig. 1D and Fig. 2D and Comparative Example 1-3 (as shown in Fig. 1E and Fig. 2E, but thick and clean crystallized layers were not observed compared with Example 1-1 (as shown in Fig. 1A and Fig. 2A and Example 1-2 (as shown in Fig. 1B and Fig. 2B, and most of the carbon structures were found to be amorphous. Meanwhile, the catalyst-specific thick and crystallized layers and the hollow and highly porous structures of carbon were found to be present at the same time in Examples 1-1 to 1-2. In particular, inside the carbon, the thick and clean crystallized layers were formed inside the carbon in a majority, and a very low degree of an amorphous structure was able to be identified in the SEM and TEM photos.

### Experimental Example 2

A pre-treatment and an analysis using BET (Brunauer, Emmett, Teller) were conducted with porous carbon supports of Examples 1-1 to 1-2 and Comparative Examples 1-1 to 1-3, respectively. In the pre-treatment using BET, carbon supports were heated in a vacuum condition, at a temperature of 200°C, and for 12 hours or more, and then impurities including moisture in the carbon support were removed. Afterwards, the tube with the sample inside were clamped by using the device for BET analysis, and nitrogen gas gradually flew into interior of the tube at a temperature condition of 77.35 K to have the nitrogen gas to be adsorbed and desorbed from the surface of the sample. In the process, a constant temperature line of nitrogen adsorption and desorption called "Isotherm" was obtained by using the volume of nitrogen gas adsorbed into the sample and the relative pressure of the interior of the tube, and then based on the curved line, the following numbers about porosity were calculated.

With the porous carbon supports of Examples 1-1 to 1-2 and Comparative Examples 1-1 to 1-3, the surface area of pores (SSA, (i)) in a size range of more than 0 nm to less than 2 nm was calculated based on the t-plot method based on the Harkins-Jura equation, as obtained in the thickness (t) range of 0.35 nm to 0.4 nm. The surface area of pores (SSA, (ii)) in a size range of 2 nm or more to 5 nm or less and the surface area of pores (SSA, (iii)) in a size range of 2 nm or more to 100 nm or more were calculated based on the BJH desorption method based on the Harkins-Jura equation. In addition, BET-based specific surface area (total SSA, (iv)) was calculated based on the BET (Brunauer, Emmett, Teller) method in a relative pressure range of 0.05 to 0.30 with the porous carbon supports obtained in Examples 1-1 to 1-2 and Comparative Examples 1-1 to 1-3. The surface area ratios (v) of pores in a size range of 2 nm or more to 5 nm or less to the total BET-based specific surface area and the surface area ratios (vi) of pores in a size range of 2 nm or more to 100 nm or less to the total BET-based specific surface area were calculated, as obtained based on the BJH desorption method based on the Harkins-Jura equation, and the ratios were displayed in Table 2.

**[Table 2]**

| | (i) SSA (less than 2 nm, m²/g) | (ii) SSA (2 to 5 nm, m²/g) | (iii) SSA (2 to 100 nm, m²/g) | (iv) total SSA(m²/g) | (v) SSA (2 to 5 nm)/total SSA | (vi) SSA (2 to 100 nm)/total SSA |
|---|---|---|---|---|---|---|
| Example 1-1 | 149.18 | 213.80 | 644.47 | 549.02 | 0.39 | 1.17 |
| Example 1-2 | 176.97 | 464.85 | 945.43 | 722.35 | 0.64 | 1.10 |
| Comparative Example 1-1 | 94.40 | 17.41 | 76.59 | 187.41 | 0.09 | 0.41 |
| Comparative Example 1-2 | 145.13 | 918.95 | 1360.72 | 1448.24 | 0.63 | 0.94 |
| Comparative Example 1-3 | 44.04 | 60.91 | 121.08 | 127.67 | 0.48 | 0.95 |

Generally, it is known that the suitable size of platinum particles for a fuel cell is in a range of 3 nm to 4 nm and the size of pores for effective supporting of the platinum particles in a carbon support is in a range of 2 nm to 5 nm, and thus it is very important to adjust the specific surface area against the pore size. According to Table 2, each of the surface area of pores in a size range of 2 nm or more to 5 nm or less, as shown in Examples 1-1 to 1-2 was 213.80 m²/g, 464.85 m²/g, as obtained based on the BJH desorption method based on the Harkins-Jura equation. The sizes are very suitable for platinum particles to be supported on the carbon support. The surface area of pores in a size range of 2 nm or more to 5 nm or less in Comparative Examples 1-1 and 1-3 was relatively very small so that sufficient platinum particles are not able to be supported on the support, and the surface area in Comparative 1-2 was relatively very large so that the average size of platinum particles may be small for the pores size, which is undesirable. In addition to the pores in a size range of 2 nm to 5 nm on which platinum particles are effectively supported, overall pores in a size range of 2 nm to 100 nm also were known to be used as a pathway for water discharge in fuel cell operation, which means that porosity in the corresponding portions is important as well. Therefore, it is predicted that a higher ratio of the surface area of pores in a size range of 2 nm or more to 100 nm or less to the total of simple specific surface area means a better water discharge, a product in fuel cell operation. According to Table 2, high ratios of 1.00 or more were shown in Examples 1-1 to 1-2, and ratios of 1.00 or less were shown in Comparative 1-1 to 1-3. The results showed that a ratio of pores in a size range of 2 nm or more to 100 nm or less is very high in Examples 1-1 to 1-2 and means that there is a high chance of a better water discharge in the later operation of a fuel cell compared with Comparative Examples 1-1 to 1-3.

### Comparative Example 3

The surface area of pores in a size range of more than 0 nm to less than 2 nm was calculated with the porous carbon supports in Example 1-1 to 1-2 and Comparative Examples 1-1 to 1-3, as obtained in the thickness (t) range of 0.35 nm to 0.5 nm through adsorption isotherm analysis based on the Harkins-Jura equation-based t-plot method, and the surface area obtained above was compared with the value obtained in the thickness (t) range of 0.35 nm to 0.4 nm, and the results were displayed in Table 3. Correlation coefficients each were calculated in an individual range of a trend line when the trend line was drawn based on the linear regression. PV (Pore volume (0 nm to 2 nm)) was calculated in the thickness (t) range of 0.35 nm to 0.5 nm based on the BJH desorption method based on the Harkins-Jura equation. Correlation coefficients were obtained by using the method of calculating Pearson Correlation Coefficient (PCC) in the trend line.

**[Table 3]**

| | SSA(less than 2 nm, m²/g) (thicknes s (t) range of 0.35 nm to 0.4 nm) | Correlation coefficient(th ickness (t) range of 0.35 nm to 0.4 nm) | SSA(less than 2 nm, m²/g) (thicknes s (t) range of 0.35 nm to 0.5 nm) | Correlation coefficient(th ickness (t) range of 0.35 nm to 0.5 nm) | Difference in Correlation coefficient(th ickness (t) ranges of 0.35 nm to 0.5 nm and 0.35 nm to 0.5 nm) | PV (pore volume (0 nm to 2 nm), cm³g) |
|---|---|---|---|---|---|---|
| Example 1-1 | 149.18 | 0.999477 | - | 0.995750 | 0.003727 | 0.0246 |
| Example 1-2 | 176.97 | 0.999324 | - | 0.995983 | 0.003341 | -0.0025 |
| Comparative Example 1-1 | 94.40 | 0.999958 | 96.16 | 0.999983 | -0.000025 | 0.0492 |
| Comparative Example 1-2 | 145.13 | 0.999949 | 40.68 | 0.999584 | 0.000365 | 0.0093 |
| Comparative Example 1-3 | 44.04 | 0.999052 | 8.31 | 0.992938 | 0.006114 | 0.0034 |

According to Table 3, the surface area (SSA) and PV of pores in a size range of more than 0 nm to less than 2 nm were difficult to be obtained in an accurate way due to the cases where negative numbers had been obtained, as obtained in the thickness (t) range of 0.35 nm to 0.5 nm in Example 1-1 to 1-2. In order to figure out the difference in calculation for surface area of pores in a size range of more than 0 nm to less than 2 nm between two cases (a thickness (t) range of 0.35 nm to 0.5 nm and a thickness (t) range of 0.35 nm to 0.4 nm), correlation coefficients were obtained in an individual range. The corresponding correlation coefficient serves as an indicator of how well the trend line reflects an original data so that when the closer coefficient is to the value of 1, the better reflection is. That explains why BET-based analysis in the thickness range helpful to obtain a correlation coefficient closer to the value of 1 is required to proceed. Consequently, a correlation coefficient closer to the value of 1 was able to be obtained in the thickness (t) range of 0.35 nm to 0.4 nm compared with in the thickness range of 0.35 nm to 0.5 nm in Examples 1-1 to 1-2. Generally, a larger increase in the correlation coefficient in the thickness (t) range of 0.35 nm to 0.4 nm was able to be determined compared with the cases in Comparative Examples.

### Experimental Example 4

Tap densities and true densities were obtained by using ASTM D8176 (Standard Test Method for Mechanically Tapped Density of Activated Carbon (Powdered and Fine Mesh) with the porous carbon supports in Examples 1-1 to 1-2 and Comparative Examples 1-1 to 1-3. Specifically, tap densities were averaged after three times of measurement by using a tap density analyzer, and true densities were averaged after three times of measurement by using a helium true density analyzer. In addition, the average size of primary particles was obtained by using ASTM D3849 (Standard Test Method for Carbon Black-Morphological Characterization of Carbon Black Using Electron Microscopy) over TEM Data and displayed in Table 4.

**[Table 4]**

| | Tap density (g/cm³) | True density (g/cm³) | Average size of primary particles (nm) |
|---|---|---|---|
| Example 1-1 | 0.13 | 2.94 | 20-30 |
| Example 1-2 | 0.10 | 2.45 | 20-30 |
| Comparative Example 1-1 | 0.29 | 2.00 | 30-50 |
| Comparative Example 1-2 | 0.13 | 3.00 | 20-30 |
| Comparative Example 1-3 | 0.06 | 1.75 | 20-30 |

Tap densities closer to the value of 0.1, true densities in a value range of 2.0 to 3.0 and the average sizes of primary particles in a size range of 20 nm to 30 nm were obtained in the porous carbon supports in Examples 1-1 to 1-2 in Table 4. The results were determined as very suitable in supporting of metal catalyst. However, the true density and the average size of primary particles in Comparative Example 1-1 and a true density in Comparative Example 1-3 were outside the suitable range for supporting of metal catalysts, which may have an impact on oil absorption in a slurry preparation and dispersion of metal particles in a slurry state. The condition may become yet another cause of a low performance of fuel cells. The tap density, true density and average sizes of primary particles in Comparative Example 1-2 were so similar to the preferred values so that it was predicted that there might be little problems in oil absorption in a slurry preparation and dispersion, but eventually as shown in Table 3, the sample had a disadvantage that the suitable surface area of pores necessary for a fuel cell is too large. That is, tap density, true density and average sizes of primary particles in Comparative Example 1-2 were similar to the preferred values, but porosity of the carbon supports was not suitable to be used as a support for a fuel cell. Therefore, when all the needs in the corresponding physical characteristics were simultaneously fulfilled, fuel cell performance may be maximized.

### Experimental Example 5

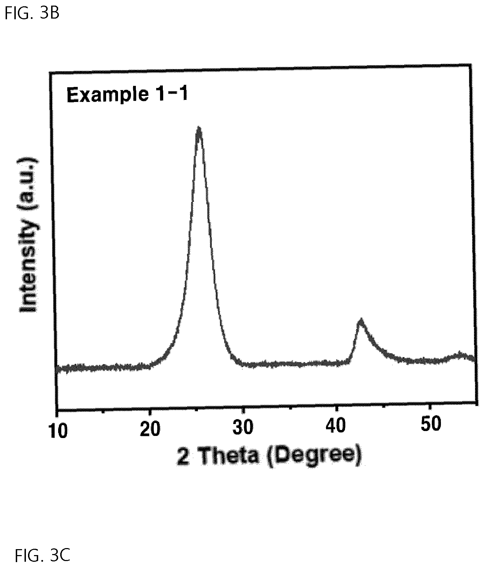

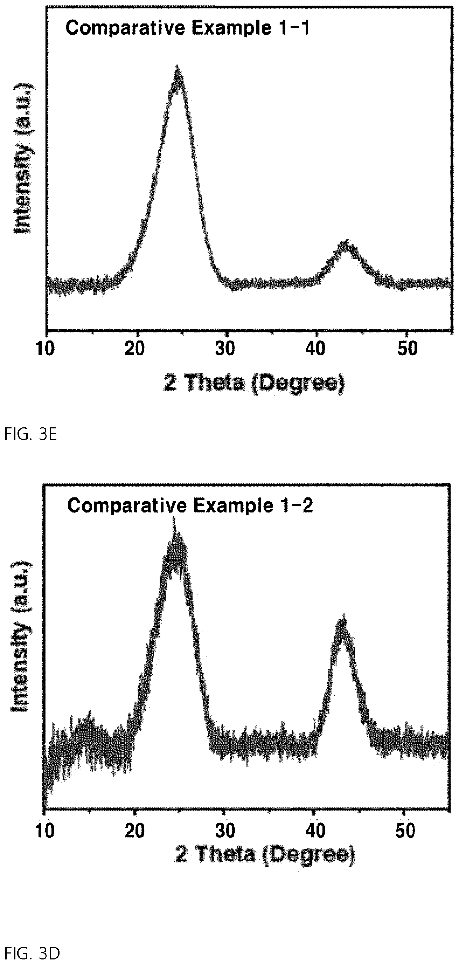

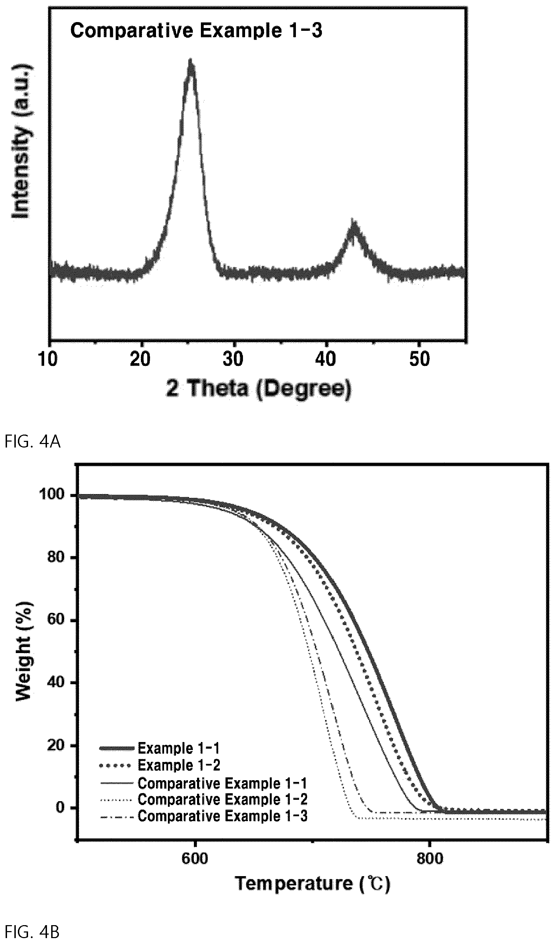

Average interlayer spacings (d₀₀₂), a-axis lattice constants (La), and average number of graphene layers were obtained by using ASTM D5187 (Standard Test Method for Determination of Crystallite Size of Calcined Petroleum Coke by X-Ray Diffraction) with the porous carbon supports in Examples 1-1 to 1-2 and Comparative Examples 1-1 to 1-3. Specifically, carbon support sample was evenly stacked in a constant thickness on the XRD substrate, irradiated with Cu K-α X-ray (wavelength: 0.154 nm), and intensity of X-ray diffraction depending on 2 Theta was measured. The consequent XRD graphs were displayed in FIGS. 3A to 3E, and La and Lc were measured based on the Bragg's equation and the Scherrer equation with the values of Peak 002 and Peak 100, carbon specific results in the drawn graphs by X-ray diffraction, and then average number of graphene layers (Lc/(d₀₀₂) +1) were obtained and displayed in Table 5. Herein, an average interlayer spacing (d₀₀₂) is an average distance between Graphite layers, an average number of graphene layer is the average number of graphene layers in a structure, and an a-axis lattice constant (La) is a Lateral Size, the crystal size in the a-axis direction, which is about how large a Graphite structure is.

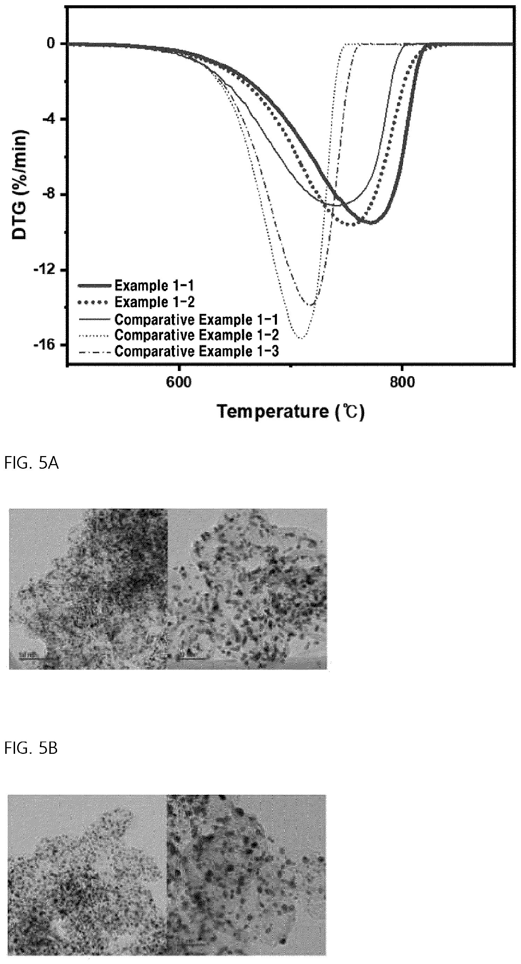

In addition, oxidation-resistance was identified through TGA analysis by using ASTM E1131 (Standard Test Method for Compositional Analysis by Thermogravimetry) with the porous carbon supports in Examples 1-1 to 1-2 and Comparative Examples 1-1 to 1-3. Specifically, the samples were loaded inside the TGA and heated at a speed of 20°c/min or less with a flow of Oxidizing gases such as air at a flow speed of 200 sccm or less. DTG (Derivative Thermogravimetry) graphs were obtained through TGA (Thermogravimetric analysis), and then minimum temperatures of DTG were obtained. The TGA and DTG graphs were displayed in FIGS. 4A to 4B.

**[Table 5]**

| | D₀₀₂ (nm) | La (nm) | Average number of layers | 30% Mass reduction temperature °C) | 500°C to 700°C Mass reduction rate (%) | DTG minimum value (%/min) | DTG minimum temperature (°C) |
|---|---|---|---|---|---|---|---|
| Example 1-1 | 0.3460 | 8.68 | 10.73 | 720.5 | 19.19 | -9.49 | 773.50 |
| Example 1-2 | 0.3488 | 7.69 | 8.12 | 712.7 | 22.31 | -9.61 | 754.70 |
| Comparative Example 1-1 | 0.3655 | 4.47 | 5.59 | 695.9 | 32.69 | -8.54 | 738.3 |
| Comparative Example 1-2 | 0.3635 | 3.32 | 5.49 | 681.1 | 54.33 | -15.66 | 709.2 |
| Comparative Example 1-3 | 0.3539 | 6.49 | 8.90 | 686.0 | 45.25 | -13.87 | 717.1 |

According to Table 5, the carbon supports in Examples 1-1 to 1-2 had a smaller average interlayer spacing (d₀₀₂) and a larger a-axis lattice constant than those in Comparative Examples 1-1 to 1-3, which means that the carbon supports in Examples 1-1 to 1-2 have a narrower interlayer spacing of Graphite, more stacked layers of Graphite on average, a larger thickness of Graphite, and a larger width of Graphite on average. Thus, the carbon supports are highly porous and crystalline. According to FIGS. 4A to 4B in Table 5, the carbon supports in Examples 1-1 to 1-2 had a lower mass reduction rate (%) at a temperature range of 500 c to 700 c and a higher minimum temperature in DTG than those in Comparative Examples 1-1 to 1-3 so that the porous carbon supports in Examples 1-1 to 1-2 were determined to face a mass reduction at a high temperature. In addition, minimum values in DTG in Examples 1-1 to 1-2 were found to be larger than those in in Comparative Examples 1-1 to 1-3. The result showed that a mass reduction due to oxidation was relatively slow as well. Taken together, Examples 1-1 to 1-2 showed that the higher a temperature is, the slower a mass reduction is in TGA, which means a high oxidation-resistance. Consequently, a high crystallinity in Examples 1-1 to 1-2 may be identified to result in a high oxidation-resistance.

### Experimental Example 6

TEM photos of fuel cell catalysts according to Examples 2-1 to 2-2 and Comparative Examples 2-1 to 2-3 were displayed in FIGS. 5A to 5E, respectively. Afterwards, Pt content, average particle size of supported Pt, as obtained in Examples 2-1 to 2-2 and Comparative Examples 2-1 to 2-3, were obtained. In addition, Half-cell potential test was carried out to assess electrochemical reactions, and the results were displayed in Table 6.

Pt content was measured by using an XRF device. Signal standard data was obtained depending on the supporting rate by measuring Pt Signal of the standard sample with an amount of supported Pt being already-known. The measured Pt signals of the samples obtained in Examples 2-1 to 2-2 and Comparative Examples 2-1 to 2-3 were substituted into the standard data to calculate an amount of supported Pt.

Average sizes of supported Pt particles were measured by using Image J software with the diameters of Pt particles identified in the TEM photos, and at least 50 Pt particles in the TEM photos were studied to calculate the mean and standard deviation.

Electrochemical experiments were carried out in Rotating Disk Electrode (RDE) 3 Electrode Cell, and 0.1M HClO₄ solution was used as an electrolyte. A reference electrode used Ag/AgCl (saturated KCl, 3M), and the other electrode used platinum wire. To prepare a catalyst ink, catalysts were placed in distilled water, Nafion (5% by weight), and isopropyl alcohol (IPA) and were subjected to ultrasonic dispersion. The prepared ink was loaded on glassy carbon RDE (5 mm) in an amount of 100 µg per 1 cm² platinum area by using a micropipette, and the ink was dried. Measurement through Cyclic Voltammetry (CV) was implemented at a scan rate of 20 mV/s in a voltage range of 0.05 V_{RHE} to 1.05 V_{RHE} after high purity nitrogen gas was fuzzed for 30 minutes. Electrochemical Surface Area (ECSA) was calculated by using the hydrogen desorption area in a voltage range of 0.05 V_{RHE} to 0.4 V_{RHE}. Oxidation-reduction reaction (ORR) was carried out in a voltage range of 0.05 V_{RHE} to 1.05 V_{RHE}, at a RED torque speed of 1600 rpm, and at a scan rate of 5 mV/s after high purity oxygen gas was fuzzed for 30 minutes.

Herein, Pt loading (µg/cm²) is an indicator of how many Pt particles are loaded per unit area of electrodes. ECSA (Electrochemical Surface Area) (m²/g) is the surface area of platinum particles participating in electrochemical reactions in which a larger ECSA means a higher hydrogen activity. MAs (Mass Activity) (mA/gpt) represents an oxygen activity in which a higher MA generally means a higher current density, and MAs are calculated from the catalyst loading density. Half wave potential (V) is a potential when a current decreases to half. Similarly, a higher potential means a higher oxygen activity.

**[Table 6]**

| | Amount of supported Pt (%) | Average size of Pt particles (standard deviation) (nm) | Pt Loading (µg/cm²) | ESCA (m²/g) | MA (mA/gpt) | Half wave potential (V) |
|---|---|---|---|---|---|---|
| Example 2-1 | 43.50 | 3.32 (0.51) | 101.53 | 95.17 | 137.60 | 0.9310 |
| Example 2-2 | 45.60 | 3.47 (0.49) | 102.04 | 90.90 | 175.20 | 0.9321 |
| Comparative Example 2-1 | 45.00 | 5.30 (2.53) | 101.29 | 71.49 | 90.90 | 0.9170 |
| Comparative Example 2-2 | 44.20 | 2.51 (0.57) | 102.07 | 100.65 | 69.30 | 0.9042 |
| Comparative Example 2-3 | 45.20 | 4.77 (2.81) | 101.15 | 59.86 | 115.9 | 0.9213 |

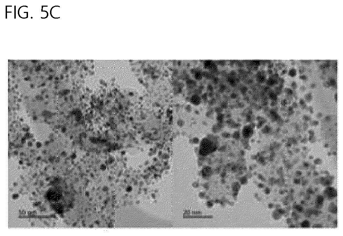

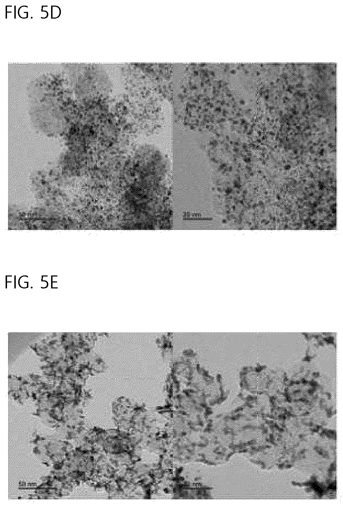

According to Table 6, fuel cells manufactured by using a fuel cell catalyst according to Example 2-1 to 2-2 were found to have an excellent ECSA, MA, and Half wave potential (V) overall. In particular, ECSA, MA, and Half wave potential (V) in Examples 2-1 to 2-2 were identified to be very large overall even though amounts of supported Pt (%) and Pt loading per unit area in Examples 2-1 to 2-2 are almost the same as those in Comparative Examples 2-1 to 2-3. The result means that carbon used in Examples 2-1 to 2-2 have porosity suitable for a fuel cell despite a similar amount of supported Pt, which results in a large portion of electrochemical activities and an excellent oxygen reduction reaction. That kind of a high performance of fuel cells are driven by the surface area of pores in a size range of 2 nm or more to 5 nm or less, as identified earlier in Example 1. The specific surface area in Example 1-1 to 1-2 was suitable for supporting of platinum particles. After respective supporting, as shown in FIGS. 5A and 5B, it was identified that the average size of platinum particles was in a range of 3 nm to 4 nm in sphere, and the platinum particles had a uniform size and shape. However, the specific surface area of Comparative Example 2-1 shown in FIG. 5C was small so that the average size of platinum particles was relatively very large to the point of 5.30 nm, and due to that, a relatively small ECSA was identified. Conversely, the specific surface area of Comparative Example 2-2 shown in FIG. 5D was large so that the average size of platinum particles was small at 2.51 nm, and due to that, a large ECSA but a small MA were identified. In addition, the specific surface area of Comparative Example 2-3 shown in FIG. 5E was small so that some of particles were not evenly dispersed or were not loaded in a sphere shape, and due to that, the average size was 4.77 nm and the standard deviation was 2.81 nm, which were very high. Similarly, a small ECSA was measured.

## Claims

1. A porous carbon support comprising:
pores in a size range of more than 0 nm to less than 2 nm have a surface area range of 100 m²/g to 300 m²/g, as obtained through adsorption isotherm analysis based on a Harkins-Jura equation-based t-plot method in a thickness (t) range of 0.35 nm to 0.4 nm; and
pores in a size range of 2 nm or more to 5 nm or less have a surface area range of 100 m²/g to 800 m²/g as obtained through adsorption isotherm analysis based on the Harkins-Jura equation-based Barrett-Joyner-Halenda (BJH) desorption method.

2. The porous carbon support of claim 1, wherein a ratio of the surface area of the pores in the size range of 2 nm or more to 5 nm or less to a total BET-based specific surface area of the porous carbon support is in a range of 0.2 to 1, as obtained through adsorption isotherm analysis based on the Harkins-Jura equation-based BJH desorption method.

3. The porous carbon support of claim 1, wherein the surface area of the pores in the size range of 2 nm or more to 100 nm or less is in a range of 200 m²/g to 2000 m²/g, as obtained through adsorption isotherm analysis based on the Harkins-Jura equation-based BJH desorption method.

4. The porous carbon support of claim 1, wherein a ratio of the surface area of the pores in the size of 2 nm or more to 100 nm or less to a total BET-based specific surface area of the porous carbon support is in a range of 0.5 to 2, as obtained through adsorption isotherm analysis based on the Harkins-Jura equation-based BJH desorption method.

5. The porous carbon support of claim 1, wherein the porous carbon support has a tap density in a range of 0.05 g/cm³ to 0.5 g/cm³.

6. The porous carbon support of claim 1, wherein the porous carbon support has a true density in a range of 2.1 g/cm³ to 4 g/cm³.

7. The porous carbon support of claim 1, wherein primary particles of the porous carbon support has an average size in a range of 10 nm to 30 nm.

8. The porous carbon support of claim 1, wherein the porous carbon support has a layered structure.

9. The porous carbon support of claim 1, wherein the porous carbon support has an average interlayer spacing (d₀₀₂) in a range of 0.335 nm to 0.355 nm and an a-axis lattice constant (La) in a range of 4 nm to 10 nm, which are measured by X-ray diffraction.

10. The porous carbon support of claim 1, wherein the porous carbon support comprises 6 to 20 graphene layers on average.

11. The porous carbon support of claim 1, wherein a mass reduction rate at a temperature range of 500°c to 700°c through thermogravimetric analysis (TGA) is in a range of 0% to 30%.

12. The porous carbon support of claim 1, wherein a minimum temperature through derivative thermogravimetry (DTG) analysis for the porous carbon support is in a range of 740°C to 850°C.

13. A method of manufacturing a porous carbon support, the method comprising:
(a) heat treating a carbon material in a temperature range of 1500°C to 3000°C to remove impurities and crystallize the carbon material;
(b) pre-treating the crystallized carbon material under an atmosphere containing at least one heteroatom selected from the group consisting of boron, carbon, nitrogen, oxygen, phosphorus, and sulfur, to introduce activation sites doped with the heteroatom; and
(c) mixing the carbon material having the activation sites with an additive including an organic surfactant and then heat treating the mixture to remove the heteroatom and activate the carbon material; and
(d) washing and drying the activated carbon material.

14. A fuel cell catalyst comprising:
metal particles including platinum particles supported on the porous carbon support of claim 1.
